Europäisches Patentamt

European Patent Office

Office européen des brevets

(11) Veröffentlichungsnummer: **0 437 793 A2**

# (12) EUROPÄISCHE PATENTANMELDUNG

(21) Anmeldenummer: 90124992.0

(22) Anmeldetag: 20.12.90

(51) Int. Cl.⁵: **B60J 1/02**

(30) Priorität: 15.01.90 CH 118/90
14.04.90 DE 4012207

(43) Veröffentlichungstag der Anmeldung:
24.07.91 Patentblatt 91/30

(84) Benannte Vertragsstaaten:
AT BE CH DE ES FR GB IT LI NL SE

(71) Anmelder: Gurit-Essex AG

CH-8807 Freienbach(CH)

(72) Erfinder: Beckord, Volker
Ellernstrasse 33
W-300 Hannover(DE)
Erfinder: Rohrer, Paul Dr.
Feldstrasse 50
CH-8704 Herrliberg(CH)

(74) Vertreter: Rottmann, Maximilian R.
c/o Rottmann, Zimmermann + Partner AG
Glattalstrasse 37
CH-8052 Zürich(CH)

(54) Trennsaite.

(57) Zum Durchtrennen von dauerelastischen Klebeverbindungen, z.B. zum Heraustrennen einer eingeklebten Autoscheibe, wird eine Trennsaite (5) verwendet, die ein kantiges, vorzugsweise ein quadratisches Profil aufweist. Mit Vorteil besteht die Trennsaite aus massivem Material, das eine Zugfestigkeit
von mindestens 1000 N/mm² aufweist. Als besonders geeignet hat sich eine V2A-Legierung mit einer
Zugfestigkeit von 1700 - 2000 N/mm² erwiesen. Damit ergeben sich bei mässiger Zugkraft sehr saubere Schnittflächen, die sich gut als Grundlage für eine
neuerliche Klebestelle eignen.

FIG.1

## TRENNSAITE

Die Erfindung betrifft eine Trennsaite zum Durchtrennen von dauerelastischen Klebeverbindungen, welche Trennsaite quer zu ihrer Längsausdehnung durch die Kleberaupe gezogen wird und diese dabei der Länge nach durchtrennt.

Die Trennsaite ist ein verhältnismässig einfaches Trennwerkzeug und wird daher in grossem Umfang zum Heraustrennen von Fensterscheiben, z.B. Fahrzeugscheiben, insbesondere der Front- und Heckscheiben von Automobilen, benutzt, welche in zunehmenden Mass unter Verwendung dauerelastischer Klebstoffe mit einem Flansch der Fensteröffnung kraftschlüssig verklebt werden. Bei dieser Trennsaite kann es sich um ein im Bedarfsfall einzusetzendes Reparaturwerkzeug handeln. In diesem Fall wird die Trennsaite z.B. quer durch die Kleberaupe gestossen, an ihren Enden mit Handgriffen versehen und dann an der Innen- und Aussenseite der Scheibe manuell entlang des Klebstoffstrangs gezogen.

Nach einem anderen Vorschlag, z.B. gemäss der Lehre der DE-OS 32 15 892, wird die Trennsaite am Umfang der eingesetzten Scheibe entlang der Kleberaupe an deren Aussenrand angelegt und manuell oder maschienell nach Art einer Reissleine betätigt. Dieses Verfahren ist auch anwendbar, wenn die Trennsaite bereits vor dem Einsetzen der Scheibe in betriebsfertiger Lage an dieser fabrikmässig montiert, z.B. am Rand der Kleberaupe in diese oder in ein benachbart zur Kleberaupe verlaufendes Gummiprofil eingebettet ist. Der nach dem Heraustrennen einer Scheibe am Rahmen verbleibende Teil der Kleberaupe wird der Einfachheit halber belassen und soll als Basis für die Verklebung der Ersatzscheibe benutzt werden können.

Trennsaiten herkömmlicher Art, wie sie z.B. in der DE-OS 32 15 892 offenbart sind, haben einen runden Querschnitt. Im Hinblick auf den verhältnismässig grossen Trennwiderstand herkömmlicher dauerelastischer, z.B. auf Polyurethanbasis aufgebauter Klebemassen sollte die Trennsaite einen möglichst geringen Durchmesser und eine möglichst hohe Zugfestigkeit (Zerreissfestigkeit) haben, um mit verhältnismässig geringer Schnittkraft eine hohe Schnittwirkung zu erzielen. In der Praxis ist jedoch eine solche Trennsaite, die aus einem handelsüblichen Saitenmaterial hoher Zugfestigkeit hergestellt ist, eher mit einem stumpfen Messer vergleichbar, d.h. der Saitendurchmesser muss mit Rücksicht auf die begrenzte Zugfestigkeit verhältnismässig gross sein. Mit zunehmendem Durchmesser der Trennsaite nimmt jedoch infolge des damit erhöhten Schnittwiderstandes die auf die Trennsaite auszuübende Zugkraft ebenfalls zu. Dies erschwert einerseits die manuelle Durchführung des Trennvorganges. Andererseits nimmt mit zunehmendem Saitendurchmesser der Schnittwiderstand und damit die aufzuwendende Zugkraft in stärkerem Mass zu als der Saitenquerschnitt. Dies führt dazu, dass die auf die Trennsaite auszuübende Zugkraft mit zunehmendem Saitendurchmesser der Reisskraft näherrückt, wobei unter Reisskraft die zum Zerreisen der Trennsaite erforderliche Zugkraft verstanden wird, welche, bezogen auf den Saitenquerschnitt, die Zugfestigkeit ergibt.

Ein weiterer Nachteil der Trennsaite mit rundem Profil besteht darin, dass infolge des hohen Schnittwiderstandes eine Erwärmung der Saite eintritt, welche die Zugfestigkeit derselben herabsetzt. Ausserdem ist mit einer Rundsaite kein glatter Schnitt in der Klebemasse erzielbar, weil der Saitendurchmesser unter den gegebenen Umständen verhältnismässig gross ist im Vergleich zu den zu trennenden Strukturelementen der Klebemasse. Vielmehr entsteht eine krümelige Schnittoberfläche, welche als Basis für die Vereinigung mit neuer Klebemasse wegen inhomogener und zu geringer Haftfläche nicht geeignet ist. Bei übermässiger Erwärmung der Trennsaite während des Schnittvorganges wird zudem die Schnittoberfläche irreversibel chemisch verändert, was die Hafteigenschaften des am Rahmen verbleibenden Teils der Kleberaupe weiter verschlechtert. Die gleiche nachteilige Wirkung tritt übrigens auch auf beim Versuch, die Schnittkraft durch Erhitzen der Trennsaite zu vermindern.

Der Erfindung liegt die Aufgabe zugrunde, eine Trennsaite zu schaffen, welche unter Vermeidung der genannten Nachteile bei ihrer Anwendung eine geringere Schnittkraft erfordert und eine glatte Schnittfläche erzeugt, welche sich für die Wiederverwendung als Klebegrund für eine neue Klebeverbindung eignet.

Zur Lösung dieser Aufgabe wird vorgeschlagen, dass die Trennsaite nach dem Oberbegriff des Patentanspruchs 1 erfindungsgemäss ein kantiges Profil aufweist.

Vorzugsweise ist ein Profil zu verwenden, das eine regelmässige Profilform und möglichst wenig Kanten aufweist, also z.B. ein quadratisches Profil. Ueberraschend wurde nämlich gefunden, dass eine derart profilierte Trennsaite sich bei einem bestimmten Anlegedruck zu Beginn des Trennvorganges von selbst in eine Lage mit einer in Schnittrichtung weisenden Kante einstellt, so dass sie in weit höherem Mass als eine querschnittsgleiche Rundsaite wie ein Messer wirkt und deshalb eine weit geringere Schnittkraft, also weniger Kraftaufwand zum Schneiden erfordert und zudem einen viel feineren Schnitt gewährleistet. Mit zunehmender Anzahl Profilkanten nimmt diese vorteilhafte Wirkung allmählich ab und nähert sich derjenigen einer Rundsaite.

Beim experimentellen Vergleich einer Trennsaite mit rundem Querschnitt gegenüber einer solchen mit quadratischem Profil zeigt sich ein markanter Unterschied im Verlauf der Schnittkraft während des Schneidvorganges. Die Schnittkraft an der Rundsaite nimmt einen unruhigen Verlauf, mit lokalen Kraftspitzen, welche auf eine ruckartige Vorschubbewegung der Trennsaite hindeuten, wodurch sich die Reissgefahr erhöht. Demgegenüber verläuft die Schnittkraft bei der Vierkantsaite gleichmässig, d.h. ohne Kraftspitzen, was auf die selbsttätige Orientierung und Führung der Schnittkante zurückgeführt werden kann.

Die Reissgefahr ist dadurch erheblich geringer.

Auch mit dreieckigen und sechseckigen Profilen lassen sich ähnlich gute Resultate erzielen. In der Praxis wird man allerdings dem quadratischen Profil den Vorzug geben, da es ungleich kostengünstiger herzustellen ist als ein dreieckiges oder sechseckiges Profil, obwohl eine Trennsaite mit dreieckigem Profil eigentlich die besseren Schneideigenschaften hat und eine solche mit sechseckigem Profil bei gleichem Durchmesser des Profilumkreises einen grösseren Querschnitt aufweist und somit höhere Zugkräfte zulässt. Diesbezüglich stellt die Wahl eines quadratischen Profils einen optimalen Mittelweg dar.

Bekannte Trennsaiten in Form von Seilen oder Litzen können zwar ebenfalls vom runden Profil abweichen und haben an sich eine höhere Flexibilität. Sie erreichen aber nicht annähernd die mit einer kantigen Trennsaite aus massivem Material erreichbare Messerwirkung, da z.B. die durch Verseilung mehrerer Fäden erzielten Profilecken bei geringer Anzahl Fäden einen zu grossen Krümmungsradius aufweisen und bei grosser Anzahl Fäden zu nahe beieinander liegen, in beiden Fällen also annähernd wie eine Rundsaite wirken.

Die mit einer erfindungsgemäss profilierten Trennsaite angestrebte Verbesserung im Vergleich zu einer Rundsaite kann erreicht werden, wenn das Saitenmaterial eine Zugfestigkeit von mindestens 1000 N/mm$^2$ hat. Eine weitere Verbesserung ist erzielbardurch die Wahl eines Saitenmaterials mit höherer Zugfestigkeit, vorzugsweise in einem Bereich von 1200 bis 2500 N/mm$^2$, da sich dadurch der Durchmesser des Profilumkreises vermindern lässt, so dass auch bei starker Umlenkung der Saite während des Trennvorgangs noch genügend Sicherheitsreserve bezüglich der Zugfestigkeit vorhanden ist.

Mit Vorteil verwendet man als Saitenmaterial einen hochlegierten Stahl, z.B. eine V2A-Legierung, womit Zugfestigkeiten von 1700 bis 2000 N/mm$^2$

und darüber erreicht werden. Dadurch lässt sich der Saitenquerschnitt entsprechend verringern und auf diese Weise die Schnittkraft weiter herabsetzen. Mit abnehmendem Saitenquerschnitt erhöht sich auch die Flexibilität der Trennsaite, was sowohl die Vormontage der Trennsaite als auch die Handhabung derselben beim Heraustrennen der Scheibe erleichtert und eine höhere Biegebeanspruchung zulässt.

Ausser Stahlsaiten sind auch gegebenenfalls faserverstärkte Kunststoffsaiten mit entsprechenden Materialeigenschaften als Trennsaiten für den genannten Zweck denkbar.

Mit einer geringeren Schnittkraft ist selbstverständlich ein geringerer Kraftaufwand für den auf die Trennsaite auszuübenden Zug verbunden. Der Vorteil der deutlich geringeren Zugkraft kommt bei manuell durchgeführtem Trennvorgang insbesondere auch beim Schneiden um die Scheibenecken zur Geltung. In diesen Bereichen ist die Gefahr, einen Lackschaden zu verursachen, besondersgross, weil bei grösserer Kraftanstrengung die Saitenführung nicht mehr in genügendem Mass unter Kontrolle gehalten werden kann, vor allem, wenn dabei noch versucht wird, die Schnittwirkung durch zusätzliche Sägebewegungen der Trennsaite zu erhöhen.

Die verminderte Schnittkraft erleichtert nicht nur die Handhabung der Trennsaite, sondern gewährleistet im weiteren eine glatte Schnittfläche, die zudem ohne Ueberhitzung der Oberflächenstruktur der Klebemasse erzielt wird und sich daher sowohl mechanisch als auch chemisch für den unmittelbaren Auftrag einer neuen Kleberaupe wesentlich besser eignet als Schnittflächen, die mit herkömmlichen, runden Saiten erzielt werden konnten.

Der Durchmesser des Profilumkreises sollte unter den gegebenen Umständen bezüglich der üblicherweise verwendeten Klebemassen und der üblichen Anwendungsformen der Trennsaite nicht grösser als 1 mm sein. Bei gleicher Grösse des Profilumkreises ergibt die quadratische Profilform einen grösseren Saitenquerschnitt als die dreiecke Profilform. Die Herstellung einer Trennsaite mit quadratischem Profil ist zudem kostengünstiger. Eine Trennsaite mit dreieckigem Profil hat demgegenüber eine höhere Schnittwirkung und gelangt schon bei geringerem Anlegedruck in die für den Schnittvorgang gewünschte Lage.

Gegenstand der Erfindung sind ausserdem ganz allgemein die Verwendungeines massiven Drahtes mit kantigem Profil und einer Zugfestigkeit von mindestens 1000 N/mm$^2$ als Trennsaite zum Durchtrennen von dauerelastischen Klebeverbindungen, z.B. zum Durchtrennen einer Polyurethan-Klebeverbindung, sowie die Verwendung einer solchen Trennsaite zum Heraustrennen von Fensterscheiben, die in ihrem Randbereich mit einem Rahmen kraftschlüssig verklebt sind, insbesondere von verklebten Autoscheiben.

In der Zeichnung sind Anwendungsformen der erfindungsgemässen Trennsaite und die Wirkungsweise derselben schematisch dargestellt, und zwar zeigen:

Fig. 1 und 2     das manuelle Durchtrennen einer im Querschnitt bzw. in Ansicht dargestellten Klebeverbindung zwischen einer Autoscheibe und deren Rahmen;

Fig. 3 und 4     das maschinelle Durchtrennen einer Klebeverbindung der gleichen Art;

Fig. 5     Schnittstelle an der Kleberaupe bei der Anordnung nach Fig. 4, in grösserem Massstab;

Fig. 6a-f     verschiedene Eindringphasen beim Einziehen einer vierkantigen Trennsaite in eine Kleberaupe;

Fig. 7     Ansicht einer Prüfapparatur für Trennsaiten;

Fig. 8     Querschnitt nach der Linie VII-VII in Fig. 4, in grösserem Massstab;

Fig. 9 und 10     Diagramme über den Kraftverlauf an einer vierkantigen bezw. runden Trennsaite während je eines mit der Prüfapparatur nach den Fig. 7 und 8 durchgeführten Trennvorganges; und

Fig. 11     einen stark vergrösserten Längsteilschnitt durch einen Abschnitt einer Kleberaupe, die mit einer Rundsaite durchgetrennt wurde, mit stilisierter Darstellung der Oberflächenstruktur der dabei erhaltenen Schnittfläche.

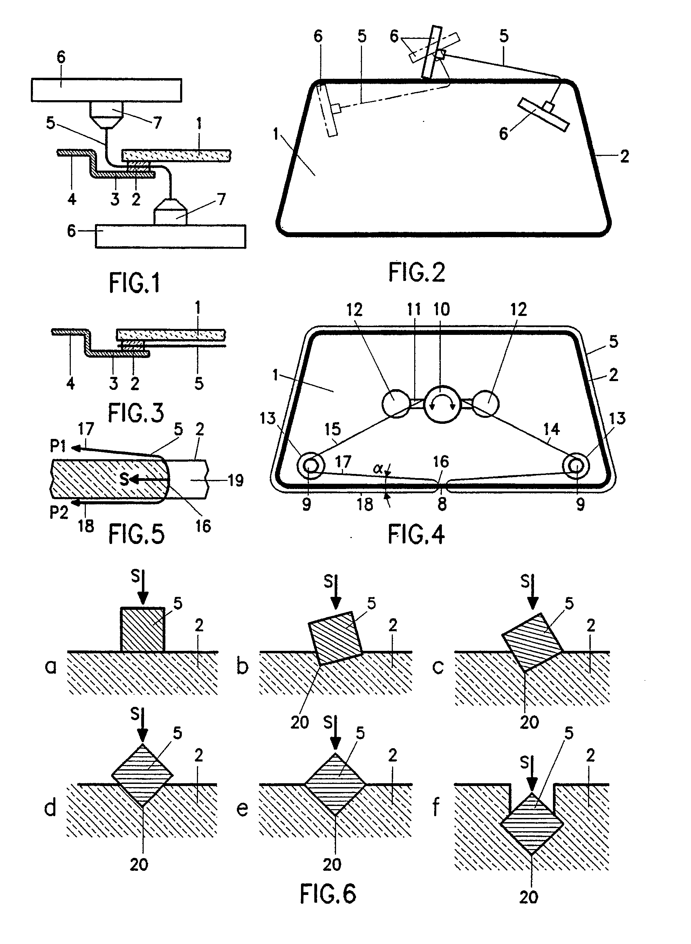

Gemäss Fig. 1 ist eine Autoscheibe 1 in ihrem Randbereich durch eine Kleberaupe 2 mit einem Flansch 3 des Fensterrahmens 4 einer Autokarosserie kraftschlüssig verbunden. Die Kleberaupe 2 besteht aus einem dauerelastischen Klebstoff, z.B. auf Polyurethanbasis. Die Trennvorrichtung besteht im vorliegenden Beispiel aus einer Trennsaite 5 von beispielsweise etwa 0.5 m Länge, welche anfänglich quer durch die Kleberaupe 2 gestossen wird und welche an beiden Enden mit je einem Handgriff 6 verbunden ist, von denen sich der eine an der Aussenseite und der andere an der Innenseite der Scheibe 1 bzw. der Autokarosserie befindet. Zum Einspannen der Trennsaite 5 an den Handgriffen 6 dient je ein frei drehbares Spannfutter 7, damit sich die Trennsaite 5 zwanglos in die

für den Schneidvorgang gewünschte Lage drehen kann.

An diesen Handgriffen 6 wird die Trennsaite 5 quer zu ihrer Längsausdehnung durch die Kleberaupe 2 gezogen, wobei diese der Länge nach durchgetrennt wird. Dabei wird die Trennsaite 2 wechselweise am einen Handgriff 6 festgehalten und am anderen Handgriff 6 abgezogen, wie dies aus Fig. 2 hervorgeht. Aus der mit ausgezogenen Linien gezeichneten Stellung der Trennvorrichtung wird mit dem Abziehen der Trennsaite 5 am unteren Handgriff 6 begonnen, während der obere Handgriff 6 festgehalten wird, bis die Trennvorrichtung die strichpunktiert gezeichnete Stellung erreicht. Danach wird die Trennsaite 5 an der unteren Seite festgehalten und an der oberen Seite abgezogen.

Je nach dem Verlauf der Kleberaupe 2 kann es unter Umständen zweckmässig sein, die Trennsaite 5 gleichzeitig an beiden Enden abzuziehen oder kurzhubige Sägebewegungen auszuführen z.B. an den Ecken der Autoscheibe 1. In solchen Fällen ist stets der gleiche Abschnitt der Trennsaite an der Schnittstelle im Einsatz.

Bei der Anwendungsform nach den Fig. 3 und 4 wird zum Heraustrennen derselben Autoscheibe 1 eine mehrere Meter lange Trennsaite 5 an den äusseren Umfang der Kleberaupe 2 angelegt. Die beiden Enden der Trennsaite 5 werden an einer Stelle 8, die sich im dargestellten Beispiel an der unteren Längsseite der Scheibe 1 befindet, quer durch die Kleberaupe 2 hindurchgezogen und über Umlenkrollen 9 mit einer Aufwickelvorrichtung 10 verbunden. Letztere ist an einer Traverse 11 befestigt, die mit Saugnäpfen 12 an der in Fig. 4 betrachteten Innenseite der Scheibe 1 festgehalten wird. Die Umlenkrollen 9 sind ebenfalls mit je einem Saugnapf 13 an der Scheibe 1 fixiert. Die Aufwickelvorrichtung 10 weist in an sich bekannter und hier nicht dargestellter Weise zwei Wickeltrommeln auf, die in entgegengesetzter Drehrichtung antreibbar und wahlweise feststellbar sind. Jede Wickeltrommel nimmt einen der beiden Endabschnitte 14 und 15 der Trennsaite 5 auf. Zum Betrieb der Aufwickelvorrichtung 10 kann eine Handkurbel oder ein Antriebsmotor vorgesehen sein. Diese an sich bekannten Antriebsmittel sind in der Zeichnung nicht dargestellt.

Zu Beginn des Trennvorganges wird der eine Endabschnitt der Trennsaite 5, z.B. der Endabschnitt 14, an der Aufwickelvorrichtung 10 festgehalten, während diese den anderen Endabschnitt 15 aufwickelt und dabei die Trennsaite 5 von der Stelle 8 aus quer durch die Kleberaupe 2 zieht. Die Umlenkrollen 9 sorgen für einen günstigen Schnittwinkel, wobei unter Schnittwinkel der Winkel $\alpha$ zwischen den von der Schnittstelle 16 ausgehenden Saitenabschnitten 17 und 18 verstanden wird. Dieser Winkel sollte möglichst nicht grösser sein als 90°, was durch geeignete Anordnung je einer Umlenkrolle 9 in den beiden unteren Scheibenecken im allgemeinen erreichbar ist. Sobald durch den beschriebenen Trennvorgang die eine Scheibenhälfte abgetrennt ist, wird der aufgewickelte Endabschnitt 15 der Trennsaite 5 fixiert und der andere, zuvor festgehaltene Endabschnitt 14 aufgewickelt, um die andere Scheibenhälfte in gleicher Weise abzutrennen.

Die Fig. 5 zeigt eine vergrösserte Ansicht der Trennstelle 16 nach Fig. 4, wobei die durch den Trennvorgang entstandene Schnittfläche mit 19 bezeichnet ist. Die an den Saitenabschnitten 17 und 18 wirkenden Zugkräfte P1 und P2 sind beim einseitigen Abziehen der Trennsaite 5 nicht gleich gross, d.h. die von der Aufwickelvorrichtung 10 auf den Saitenabschnitt 17 ausgeübte Zugkraft P1 ist grösser als P2 und erreicht daher zuerst die Grenze der Belastbarkeit der Trennsaite 5. Andererseits ist die an der Trennstelle 16 von der Trennsaite 5 auf die Klebemasse 2 ausgeübte Schnittkraft S vom Schnittwinkel α abhängig; sie nimmt mit zunehmendem Schnittwinkel im Vergleich zu den Zugkräften P1 und P2 ab, d.h. zur Erzielung einer gleichbleibenden Schnittkraft S müssen die Zugkräfte P1 und P2 mit zunehmendem Schnittwinkel vergrössert werden. Im übrigen ist natürlich auch die Schnittgeschwindigkeit für die Kraftwerte massgebend.

Die Drehung der z.B. vierkantigen Trennsaite 5 in die Schneideposition erfolgt gemäss dem in Fig. 6 dargestellten Funktionsablauf von selbst, wenn sie unter der Einwirkung der in Pfeilrichtung wirkenden Schnittkraft S in die Kleberaupe 2 einzudringen beginnt. Anfänglich legt sich die Trennsaite 5 mit einer ihrer flachen Seiten an die Oberfläche der Kleberaupe 2 an (Fig. 6a). Mit zunehmendem Anlegedruck beginnt das Saitenprofil aufgrund der labilen Gleichgewichtslage nach der einen Seite hin zu kippen (Fig. 6b,c), bis es eine Lage erreicht, in der seine vorstossende Kante 20 in die Schnittrichtung weist (Fig. 6d). Beim weiteren Eindringen der Trennsaite 5 in die Kleberaupe 2 (Fig. 6e,f) behält das Saitenprofil die erreichte Lage bei, so dass dessen vorstossende Kante 20 die Kleberaupe 2 der Länge nach wie ein Messer durchtrennt.

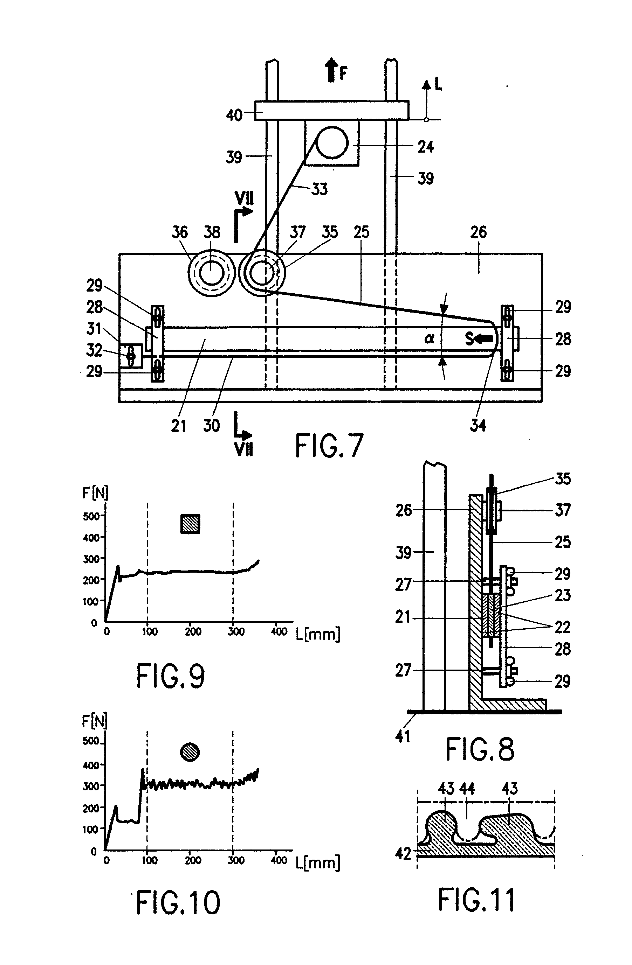

Die Prüfapparatur nach den Fig. 7 und 8 stellt eine Schneidvorrichtung dar, bei welcher die zu prüfende Trennsaite in ähnlicher Form zur Trennung einer Kleberaupe angewendet wird wie bei der Anordnung nach den Fig. 3 und 4 zum Heraustrennen einer Autoscheibe. Auf diese Weise lassen sich verschiedenartige Trennsaiten nicht nur unter den gleichen Bedingungen, sondern zugleich auch in einer praxisbezogenen Anwendung testen.

Die gezeigte Prüfapparatur umfasst im wesentlichen einen Prüfkörper 21, der aus zwei Metallschienen 22 besteht, die durch eine Kleberaupe 23 miteinander verbunden sind, und eine Zugvorrichtung 24 zum Abziehen der Trennsaite 25 quer durch die Kleberaupe 23. Die Metallschienen 22 bestehen beispielsweise aus Aluminium und haben eine Länge von 280 mm, eine Breite von 15 mm und eine Dicke von 4 mm. Die Kleberaupe 23, welche z.B. aus einer Klebemasse besteht, wie sie zum Verkleben von Autoscheiben verwendet wird, ist dabei 260 mm lang und ebenfalls 15 mm breit und 4 mm dick. Zur Halterung des Prüfkörpers 21 ist ein winkelförmiger Ständer 26 vorgesehen, an dem der Prüfkörper 21 festgeklemmt werden kann. Dazu dienen am Ständer 26 feststehende Schraubenbolzen 27, zwei Klemmbriden 28 und Flügelmuttern 29.

Der eine Endabschnitt 30 der Trennsaite 25 ist in einem Spannfutter verankert, das hier als einfache Klemmplatte 31 mit Klemmschraube 32 dargestellt ist, während der andere Endabschnitt 33 der Trennsaite 25 an der Zugvorrichtung 24 eingespannt ist. Zwischen diesen Endabschnitten 30 und 33 ist die Trennsaite 25 an der Schnittstelle 34 quer durch die Kleberaupe 23 am Prüfkörper 21 gezogen und über jeweils eine von zwei Umlenkrollen 35, 36 geführt, welche am Ständer 26 um die Achsen 37 und 38 drehbar angeordnet sind. Im ganzen hat die zu prüfende Trennsaite 25 eine Länge von etwa 700 mm.

Die Zugvorrichtung 24 ist vertikal beweglich angeordnet und mit einer nicht dargestellten Antriebsmaschine verbunden, welche die Zugvorrichtung 24 aus der in Fig. 7 gezeigten Lage gleichmässig nach oben bewegt. Dabei erfolgt die Bewegung längs zweier vertikal stehender Führungsstangen 39, an denen eine die Zugvorrichtung 24 tragende Traverse 40 gleitbar gelagert ist. Die Führungsstangen 39 und der Ständer 26 sind auf einem gemeinsamen, mit 41 in Fig. 8 angedeuteten Unterbau fest angeordnet.

Der Prüfvorgang erfolgte jeweils in der Weise, dass die Zugvorrichtung 24 mit einer konstanten Abzuggeschwindigkeit von 500 mm/min hochgezogen und dabei die von der Antriebsmaschine aufgewendete Zugkraft F in Abhängigkeit von dem von der Zugvorrichtung 24 zurückgelegten Weg L gemessen wurde. Der Schnittwinkel α und die Schnittkraft S lassen sich aus diesen Angaben und der geometrischen Anordnung der Prüfapparatur ohne weiteres berechnen. Im übrigen wurden die Versuche jeweils bis zum Zerreissen der Trennsaite 25 fortgesetzt, wobei die zum Zerreissen erforderliche Zugkraft F, d.h. die Reisskraft, gemessen wurde.

In den Fig. 9 und 10 sind die Prüfungsergebnisse dargestellt, die mit einer vierkantigen im Vergleich zu einer runden Trennsaite unter den gleichen Arbeitsbedingungen erzielt wurden. Die vierkantige Trennsaite bestand aus einer V2A-Legierung mit einer Zugfestigkeit von 1700 bis 2000 $N/mm^2$, wobei die Profilkantenlänge 0,60 mm betrug. Die runde Trennsaite war ein Federstahldraht C mit einem Durchmesser von 0,60 mm und einer Zugfestigkeit von rund 2400 bis 2700 $N/mm^2$ (nach DIN 2076).

Es zeigt sich, dass die mittlere Zugkraft F in einem ausgewählten Bereich der Weglänge L von 100 bis 300 mm praktisch konstant ist, und zwar unabhängig von dem sich verändernden Schnittwinkel $\alpha$. Dieser Umstand ermöglicht auf einfache Weise einen direkten Vergleich verschiedenartiger Trennsaiten. Zu diesem Zweck wurde aus den auf dem genannten Weglängenbereich auftretenden Kraftspitzen ein Mittelwert der Zugkraft ermittelt, der für die vierkantige Trennsaite 244,2 N und für die Rundsaite 304,3 N betrug. Im weiteren wurde für die Vierkantsaite eine Reisskraft von 602,8 N und für die Rundsaite eine solche von 620,9 N gemessen. Mit diesen Werten ergibt sich ein Verhältnis der Zugkraft zur Reisskraft von rund 40% für die Vierkantsaite und rund 49% für die Rundsaite, d.h. im Vergleich zur Rundsaite ist bei der Vierkantsaite die erforderliche Zugkraft weiter von der zugehörigen Reisskraft entfernt und damit die Gefahr eines Saitenbruchs geringer.

Ausserdem zeigen die Diagramme nach den Fig. 9 und 10 den unterschiedlichen Kraftverlauf beim Trennvorgang. Während die Zugkraft an der vierkantigen Trennsaite einen ziemlich stetigen Verlauf nimmt, treten bei der Rundsaite verhältnismässig starke Schwankungen der Zugkraft auf. Dementsprechend ergaben sich auch starke Unterschiede im Schnittbild. Während die vierkantige Trennsaite eine äusserst feine, glatte Schnittfläche ergab, war die Schnittfläche nach dem Trennen mit der runden Trennsaite grob und krümelig, wie dies in Fig. 11 schematisch dargestellt ist. Diese Figur zeigt den verbleibenden Teil 42 der Kleberaupe, an dessen Oberfläche sich durch den Trennvorgang mit der runden Saite Vorsprünge 43 gebildet haben, welche den Zutritt der neuen, im allgemeinen zähflüssigen Klebemasse 44 (strichpunktiert gezeichnet) zu den dazwischen und teilweise darunter liegenden Oberflächenpartien verhindern. Dies hat zur Folge, dass für eine neue Klebeverbindung eine nur ungenügende Haftfläche zur Verfügung steht.

## Patentansprüche

1. Trennsaite zum Durchtrennen von dauerelastischen Klebeverbindungen, welche Trennsaite quer zu ihrer Längsausdehnung durch die Kleberaupe gezogen wird und diese dabei der Länge nach durchtrennt, wobei die Trennsaite durch einen metallischen Draht aus massivem Material gebildet ist, dadurch gekennzeichnet, dass die Trennsaite ein kantiges Profil aufweist.

2. Trennsaite nach Anspruch 1, dadurch gekennzeichnet, dass sie eine regelmässige Profilform aufweist.

3. Trennsaite nach Anspruch 2, dadurch gekennzeichnet, dass sie ein quadratisches Profil aufweist.

4. Trennsaite nach Anspruch 2, dadurch gekennzeichnet, dass sie ein dreieckiges Profil aufweist.

5. Trennsaite nach Anspruch 2, dadurch gekennzeichnet, dass sie ein sechseckiges Profil aufweist.

6. Trennsaite nach Anspruch 1, dadurch gekennzeichnet, dass das Saitenmaterial eine Zugfestigkeit von mindestens 1000 $N/mm^2$ hat.

7. Trennsaite nach Anspruch 6, dadurch gekennzeichnet, dass das Saitenmaterial eine Zugfestigkeit zwischen 1200 und 2500 $N/mm^2$ hat.

8. Trennsaite nach Anspruch 7, dadurch gekennzeichnet, dass das Saitenmaterial eine Zugfestigkeit zwischen 1700 und 2000 $N/mm^2$ hat.

9. Trennsaite nach einem der Ansprüche 6 bis 8, dadurch gekennzeichnet, dass das Saitenmaterial ein hochlegierter Stahl, insbesondere eine V2A-Legierung ist.

10. Trennsaite nach Anspruch 1, dadurch gekennzeichnet, dass der Umkreis des Profils einen Durchmesser von höchstens 1 mm aufweist.

11. Verwendung eines massiven Drahtes mit kantigem Profil und einer Zugfestigkeit von mindestens 1000 $N/mm^2$ zum Durchtrennen von dauerelastischen Klebeverbindungen.

12. Verwendung eines massiven Drahtes mit kantigem Profil und einer Zugfestigkeit von mindestens 1000 $N/mm^2$ als Trennsaite zum Heraustrennen von Fensterscheiben, die in ihrem Randbereich mit einem Rahmen kraftschlüssig verklebt sind.

13. Verwendung eines massiven Drahtes mit kantigem Profil und einer Zugfestigkeit von mindestens 1000 $N/mm^2$ als Trennsaite zum Heraustrennen von eingeklebten Autoscheiben.

**14.** Verwendung eines massiven Drahtes mit kantigem Profil und einer Zugfestigkeit von mindestens 1000 N/mm$^2$ als Trennsaite zum Durchtrennen von Polyurethan-Klebeverbindungen.

FIG.1

FIG.2

FIG.3

FIG.5

FIG.4

FIG.6

EP 0 437 793 A2

FIG.7

FIG.9

FIG.10

FIG.8

FIG.11

9